# EUROPÄISCHE PATENTSCHRIFT

(11) **EP 1 926 543 B1**
(45) Veröffentlichungstag und Bekanntmachung des Hinweises auf die Patenterteilung: **14.12.2011**
(21) Anmeldenummer: 06764280.1
(22) Anmeldetag: 01.08.2006
(51) Int. Cl.: B01D 53/94, B01D 53/90, F01N 3/20, F01N 9/00, F01N 11/00

(54) **VERFAHREN ZUM BETREIBEN EINER BRENNKRAFTMASCHINE UND VORRICHTUNG ZUR DURCHFÜHRUNG DES VERFAHRENS**
METHOD FOR OPERATING AN INTERNAL COMBUSTION ENGINE AND DEVICE FOR IMPLEMENTING THE METHOD
PROCEDE D'EXPLOITATION D'UN MOTEUR A COMBUSTION INTERNE ET DISPOSITIF POUR METTRE LEDIT PROCEDE EN OEUVRE

(30) Priorität: 07.09.2005 DE 102005042488
(43) Veröffentlichungstag der Anmeldung: 04.06.2008
(73) Patentinhaber: ROBERT BOSCH GMBH, 70442 Stuttgart (DE)
(72) Erfinder: WALZ, Christian, 76448 Durmersheim (DE); LOEHR, Matthias, 71711 Steinheim/Hoepfigheim (DE); RUDOLPH, Andreas, 89297 Roggenburg (DE)
(86) Internationale Anmeldenummer: PCT/EP2006/064904
(87) Internationale Veröffentlichungsnummer: WO 2007/028681

(56) Entgegenhaltungen:
- DE-A1- 10 301 606
- DE-A1- 10 349 126
- DE-A1- 19 903 439
- GB-A- 2 403 165

## Beschreibung

### Stand der Technik

Die Erfindung geht aus von einem Verfahren zum Betreiben einer Brennkraftmaschine, in deren Abgasbereich ein SCR-Katalysator und stromabwärts nach dem SCR-Katalysator ein NOx-Sensor angeordnet sind, und von einer Vorrichtung zur Durchführung des Verfahrens nach der Gattung der unabhängigen Ansprüche.

In der DE 199 03 439 A1 werden ein Verfahren und eine Vorrichtung zum Betreiben einer Brennkraftmaschine beschrieben, in deren Abgasbereich ein SCR-Katalysator (Selective-Catalytic-Reduction) angeordnet ist, der die im Abgas der Brennkraftmaschine enthaltenen Stickoxide mit einem Reagenzmittel zu Stickstoff reduziert. Die Dosierung des Reagenzmittels erfolgt vorzugsweise in Abhängigkeit von Betriebskenngrößen der Brennkraftmaschine, wie beispielsweise der Drehzahl und der eingespritzten Kraftstoff menge. Weiterhin erfolgt die Dosierung vorzugsweise in Abhängigkeit von Abgas-Kenngrößen, wie beispielsweise der Abgastemperatur oder der Betriebstemperatur des SCR-Katalysators.

Als Reagenzmittel ist beispielsweise das Reduktionsmittel Ammoniak vorgesehen, das aus einer Harnstoff Wasser-Lösung gewonnen werden kann. Die Dosierung des Reagenzmittel oder von Ausgangsstoffen des Reagenzmittels muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits zu einem unnötig hohen Reagenzmittelverbrauch und andererseits, in Abhängigkeit von der Beschaffenheit des Reagenzmittels, zu einer unangenehmen Geruchsbelästigung führen kann.

In der DE 199 60 731 1A und DE 199 62 912 A1 sind jeweils NOx-Sensoren beschrieben, die zum Erfassen der in einem Abgasstrom vorliegenden NOx-Konzentration vorgesehen sind. Die NOx-Sensoren enthalten mehrere Kammern, die über die Diffusionsbarrieren miteinander in Verbindung stehen. Die bekannten Mehrkammer-NOx-Sensoren weisen aufgrund des Messprinzips eine Querempfindlichkeit gegenüber Ammoniak (NH3) auf. Das im Abgas enthaltene Ammoniak als Beispiel eines Reagenzmittels fühlt über die Reaktionen 4 NH3 + 5 O2 → 4 NO + 6 H2O zu einer Verfälschung des Sensorsignals. Wenn bei den vorbekannten Vorgehensweisen demnach eine Erhöhung der Reagenzmittel-Dosierung erfolgt, wird bei einer vorliegenden Überdosierung oder richtigen Dosierung des Reagenzmittels das Sensorsignal aufgrund des auftretenden Reagenzmittelschlupfes ansteigen und bei einer vorliegenden Unterdosierung aufgrund der zunehmenden NOx-Konvertierung abfallen. Wenn dagegen eine Absenkung der Reagenzmittel-Dosierung erfolgt, wird bei einer vorliegenden Überdosierung des Reagenzmittels das Sensorsignal aufgrund des verminderten Reagenzmittelschlupfes abfallen und bei einer richtigen Dosierung oder Unterdosierung aufgrund der nicht mehr vollständigen NOx-Konvertierung ansteigen.

In der DE 10 2004 046 640 A1 (nicht vorveröffentlicht) sind ein Verfahren zum Betreiben einer Brennkraftmaschine und eine Vorrichtung zur Durchführung des Verfahrens beschrieben, bei denen ein NOx-Sensor mit einer Querempfindlichkeit gegenüber einem Reagenzmittel stromabwärts nach dem SCR-Katalysator angeordnet ist. Im Abgasbereich ist wenigstens ein SCR-Katalysator angeordnet, der mit einem Reagenzmittel beaufschlagt wird, welches zur NOx-Konvertierung im SCR-Katalysator beiträgt. Vorgesehen ist die Berechnung zumindest eines Maßes für die stromabwärts nach dem SCR-Katalysator auftretende NOx-Konzentration, die eine Erhöhung der Genauigkeit bei der Festlegung der Dosierung des Reagenzmittels ermöglicht.

Ein Reagenzmittelschlupfkann aus der Differenz zwischen dem berechneten Maß für die NOx-Konzentration und dem gemessenen Maß für die Summe der NOx-Konzentration und der Reagenzmittel-Konzentration ermittelt werden. Berücksichtig wird die Tatsache, dass sowohl ein Reagenzmittelschlupf als auch eine unzureichende NOx-Reduktionsreaktionen eine Abweichung zwischen dem berechneten Maß für die NOx-Konzentration und dem gemessenen Maß für die Summe der NOx-Konzentration und der Reagenzmittel-Konzentration in dieselbe Richtung bewirken. Gemäß einer Ausgestaltung wird bei einer Differenz zunächst die Dosierung des Reagenzmittels vermindert. Wenn ein Reagenzmittelschlupf vorlag, wird die Verminderung der Dosierung des Reagenzmittels zu einer Verminderung des Reagenzmittelschlupfes führen. Die Verminderung der Dosierung des Reagenzmittels hat sich in diesem Fall als richtige Maßnahme herausgestellt. Lag ursprünglich eine zu geringe Dosierung des Reagenzmittels vor, so wird sich die ermittelte Differenz aufgrund der geringeren NOx-Konvertierung weiter erhöhen, sodass daraus geschlossen werden kann, dass die Verminderung der Dosierung des Reagenzmittels falsch war und stattdessen eine Erhöhung der Dosierung vorzunehmen ist.

In der DE 10 2004 031 624 A1 (nicht vorveröffentlicht) ist ein Verfahren zum Betreiben eines zur Reinigung des Abgases einer Brennkraftmaschine verwendeten SCR-Katalysators beschrieben, bei dem eine Steuerung oder Regelung des Reagenzmittel-Füllstands im SCR-Katalysator auf einen vorgegebenen Speichersollwert vorgesehen ist. Die gezielte Vorgabe des Speichersollwerts stellt einerseits sicher, dass in instationären Zuständen der Brennkraftmaschine eine ausreichende Reagenzmittelmenge zur möglichst vollständigen Beseitigung der NOx-Rohemissionen der Brennkraftmaschine zur Verfügung steht und dass andererseits ein Reagenzmittelschlupf vermieden wird.

Der Reagenzmittel-Füllstand des SCR-Katalysators wird anhand eines Katalysatormodells ermittelt, das den in den SCR-Katalysator einströmenden NOx-Massenstrom, den den SCR-Katalysator verlassenden NOx-Massenstrom, die Katalysatortemperatur sowie gegebenenfalls den Reagenzmittelschlupf berücksichtigt. Der maximal mögliche Reagenzmittel-Füllstand des SCR-Katalysators hängt insbesondere von der Betriebstemperatur des SCR-Katalysators ab, der bei geringen Betriebstemperaturen am höchsten ist und mit zunehmender Betriebstemperatur zu kleineren Werten abfällt. Der Wirkungsgrad des SCR-Katalysators hängt von der katalytischen Aktivität ab, die bei geringen Betriebstemperaturen gering ist, mit steigender Betriebstemperatur ein Maximum durchläuft und mit weiter zunehmender Betriebstemperatur wieder absinkt.

Der Erfindung liegt die Aufgabe zugrunde, ein Verfahren zum Betreiben einer Brennkraftmaschine, in deren Abgasbereich ein SCR-Katalysator und stromabwärts nach dem SCR-Katalysator ein NOx-Sensor angeordnet sind, sowie eine Vorrichtung zur Durchfiihrung des Verfahrens anzugeben, die ein möglichst optimales Abgas-Reinigungsergebnis bei einem minimalen Reagenzmittelschlupf ermöglichen.

Die Aufgabe wird durch die in den unabhängigen Ansprüchen angegebenen Merkmale jeweils gelöst.

### Vorteile der Erfindung

Das erfindungsgemäße Verfahren zum Betreiben einer Brennkraftmaschine geht davon aus, dass im Abgasbereich der Brennkraftmaschine wenigstens ein SCR-Katalysator angeordnet ist, der mit einem Reagenzmittel beaufschlagt wird, welches zur NOx-Konvertierung im SCR-Katalysator beiträgt. Stromabwärts nach dem SCR-Katalysator ist ein NOx-Sensor angeordnet, der ein Sensorsignal bereitstellt, das zumindest ein Maß für die NOx-Konzentration im Abgas stromabwärts nach dem SCR-Katalysator widerspiegel. Berechnet wird weiterhin wenigstens ein Maß für die stromabwärts nach dem SCR-Katalysator auftretende NOx-Konzentration. Ermittelt wird die Differenz zwischen dem berechneten Maß für die NOx-Konzentration und der gemessenen NOx-Konzentration. Ein Reagenzmittelsignal, welches die Dosierung des Reagenzmittels festlegt, wird nicht nur in Abhängigkeit von der ermittelten Differenz, sondern zusätzlich in Abhängigkeit von einem Maß für die Temperatur des SCR-Katalysators mit einem Korrektursignal beeinflusst.

Die erfindungsgemäße Vorgehensweise berücksichtigt bei der Festlegung der Dosierung des Reagenzmittels die Temperatur des SCR-Katalysators, welche einen Einfluss auf die Speicherfähigkeit des Reagenzmittels im SCR-Katalysator hat. Dadurch wird eine gegebenenfalls erforderliche Änderung des Reagenzmittelsignals angepasst an die temperaturabhängige Speicherfähigkeit des Reagenzmittels im SCR-Katalysator. Mit dieser Maßnahme wird erreicht, dass sowohl eine aufgrund einer Änderung des Reagenzmittelsignals eventuell auftretende Überdosierung des Reagenzmittels, die zu einem erhöhten Reagenzmittelschlupf führen würde, als auch eine Unterdosierung des Reagenzmittels, die zu einer erhöhten NOx-Belastung der Umwelt führen würde, jeweils vermieden werden.

Die erfindungsgemäße Vorgehensweise ist mit einfachen und daher preisgünstigen Mitteln dadurch realisierbar, dass lediglich ein stromabwärts nach dem SCR-Katalysator angeordneter NOx-Sensor erforderlich ist, der gegebenenfalls eine an sich unerwünschte Querempfindlichkeit gegenüber dem Reagenzmittel aufweist, die im Rahmen einer Ausgestaltung der erfindungsgemäßen Vorgehensweise gezielt ausgenutzt wird.

Vorteilhafte Weiterbildungen und Ausgestaltungen der erfindungsgemäßen Vorgehensweise ergeben sich aus abhängigen Ansprüchen.

Eine Ausgestaltung sieht vor, dass die Korrektursignale in Abhängigkeit von der Differenz und vom Maß für die Temperatur des SCR-Katalysätors in einem Kennfeld hinterlegt werden, das ein ausgewähltes Korrektursignal bereitstellt.

Eine Ausgestaltung sieht vor, dass das Reagenzmittelsignal in Abhängigkeit vom Reagenzmittel-Füllstand im SCR-Katalysator festgelegt wird. Eine Weiterbildung dieser Ausgestaltung sieht vor, dass das Reagenzmittelsignal indirekt über eine Manipulation des Reagenzmittel-Füllstands im SCR-Katalysator beeinflusst wird. Bevorzugt wird der Reagenzmittel-Füllstand im SCR-Katalysator auf einen vorgegebenen Reagenzmittel-Sollfiillstand geregelt.

Eine Ausgestaltung sieht vor, dass bei der Berechnung der stromabwärts nach dem SCR-Katalysator auftretenden NOx-Konzentration neben der NOx-Rohemission der Brennkraftmaschine die Temperatur des SCR-Katalysators und der Reagenzmittel-Füllstand im SCR-Katalysator und/oder die Raumgeschwindigkeit des Abgases im SCR-Katalysator berücksichtigt werden. Dadurch wird eine hohe Genauigkeit erreicht.

Eine weitere Ausgestaltung sieht vor, dass der vorgegebene Reagenzmittel-Sollfüllstand mindestens auf einen Maximalwert festgelegt wird, der einem vollständig mit Reagenzmittel gefüllten SCR-Katalysator entspricht. Diese Ausgestaltung weist Vorteile in Verbindung mit einer weiteren Ausgestaltung auf, welche vorsieht, dass der NOx-Sensor eine Querempfindlichkeit gegenüber dem Reagenzmittel aufweist. Die Querempfindlichkeit kann gezielt dadurch ausgenutzt werden, dass bei einer aufgetretenen Differenz zunächst stets eine Beeinflussung des Reagenzmittelsignals im Sinne einer Verminderung der Dosierung des Reagenzmittels vorgenommen wird, da die Differenz mit hoher Wahrscheinlichkeit einen Reagenzmittelschlupf widerspiegelt.

Die erfindungsgemäße Vorrichtung zum Betreiben einer Brennkraftmaschine betrifft zunächst ein Steuergerät, das zur Durchführung des Verfahrens hergerichtet ist. Das Steuergerät enthält insbesondere eine Differenz-Ermittlung, welche die Differenz zwischen dem vom NOx-Sensor bereitgestellten Abgas-Sensorsignal und dem von einer NOx-Konzentrations-Ermittlung berechneten NOx-Konzentration stromabwärts nach dem SCR-Katalysator ermittelt. Vorgesehen ist weiterhin, dass das Steuergerät ein Kennfeld enthält, welches ein Korrektursignal zur Beeinflussung des Reagenzmittelsignals bereitstellt, in welchem die Korrektursignale zumindest in Abhängigkeit von der Differenz und in Abhängigkeit vom Maß für die Temperatur des SCR-Katalysators hinterlegt sind.

Das Steuergerät enthält vorzugsweise wenigstens einen elektrischen Speicher, in dem die Verfahrensschritte als Computerprogramm abgelegt sind.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

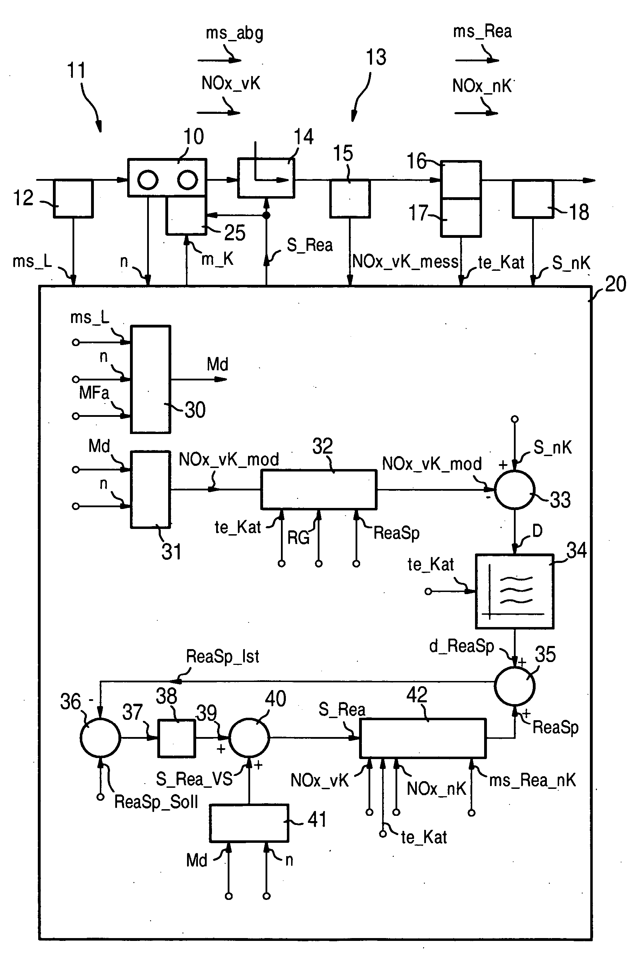

Die Figur zeigt ein technisches Umfeld, in welchem ein erfindungsgemäßes Verfahren abläuft.

Die Figur zeigt eine Brennkraftmaschine 10, in deren Ansaugbereich 11 eine Luftermittlung 12 und in deren Abgasbereich 13 eine Reagenzmittel-Dosierung 14, ein erster NOx-Sensor 15, ein SCR-Katalysator 16, ein dem SCR-Katalysator 16 zugeordneter Temperatursensor 17 sowie ein zweiter NOx-Sensor 18 angeordnet sind.

Stromabwärts nach der Brennkraftmaschine 10 treten ein Abgasstrom ms_abg sowie eine NOx-Rohkonzentration NOx_vK auf. Stromabwärts nach dem SCR-Katalysator 16 treten eine NOx-Konzentration NOx_nK sowie ein Reagenzmittelschlupf ms_Rea_nK auf.

Die Luftermittlung 12 stellt einem Steuergerät 20 ein Luftsignal ms_L, die Brennkraftmaschine 10 ein Drehsignal n, der erste NOx-Sensor 15 ein erstes NOx-Signal NOx_vK_mess, der Temperatursensor 17 ein Maß für die Temperatur te_Kat des SCR-Katalysators 16 und der zweite NOx-Sensor 18 ein Abgas-Sensorsignal S_nK zur Verfügung.

Das Steuergerät 20 stellt einer der Brennkraftmaschine 10 zugeordneten Kraftstoff-Zumessvorrichtung 25 ein Kraftstoffsignal m_K sowie der Reagenzmittel-Dosierung 14 und der Kraftstoff-Zumessvorrichtung 25 ein Reagenzmittelsignal S_Rea zur Verfügung.

Das Steuergerät 20 enthält eine Drehmoment-Ermittlung 30, der das Luftsignal ms_L, das Drehsignal n sowie ein Drehmoment-Sollwert MFa zur Verfügung gestellt werden und die ein Drehmoment Md der Brennkraftmaschine 10 ermittelt.

Das Steuergerät 20 enthält weiterhin eine NOx-Rohkonzentrations-Ermittlung 31, der das Luftsignal ms_L, das Drehsignal n sowie das Kraftstoffsignal m_K zur Verfügung gestellt werden und die ein berechnetes Maß NOx_vK_mod der NOx-Rohkonzentration NOx_vK ermittelt.

Das Steuergerät 20 enthält ferner eine NOx-Konzentrations-Ermittlung 32, der das berechnete Maß NOx_vK_mod für die NOx-Rohkonzentration NOx_vK, das Maß für die Temperatur te_Kat des SCR-Katalysators 16, eine Raumgeschwindigkeit RG sowie ein Reagenzmittel-Füllstand ReaSp im SCR-Katalysator 16 zur Verfügung gestellt werden, und die ein berechnetes Maß NOx_nK_mod für die NOx-Konzentration NOx_nK stromabwärts nach dem SCR-Katalysator 16 ermittelt.

Das berechnete Maß NOx_nK_mod für die NOx-Konzentration NOx_nK und das Abgas-Sensorsignal S_nK werden einer ersten Differenz-Er-mittlung 33 zur Verfügung gestellt, welche eine Differenz D ermittelt. Die Differenz D sowie das Maß für die Temperatur te_Kat werden einem Kennfeld 34 zur Verfügung gestellt, welches ein Korrektursignal d_ReaSp bereitstellt, das einem ersten Summierer 35 zugeführt wird.

Der erste Summierer 35 ermittelt aus dem Korrektursignal d_ReaSp und dem Reagenzmittel-Füllstand ReaSp einen Reagenzmittel-Istfüllstand ReaSp_Ist, der einer zweiten Differenz-Ermittlung 36 zur Verfügung gestellt wird, welche eine Regelabweichung 37 aus dem Reagenzmittel-Istfüllstand ReaSp_Ist und einem Reagenzmittel-Sollfüllstand ReaSp_Soll ermittelt.

Ein Regler 38 ermittelt aus der Regelabweichung 37 eine Stellgröße 39, die einem zweiten Summierer 40 zur Verfügung gestellt wird, der zur Stellgröße 39 eine Reagenzmittel-Vorsteuergröße S_Rea_VS addiert und der das Reagenzmittelsignal S_Rea bereitstellt. Die Reagenzmittel-Vorsteuergröße S_Rea_VS wird von einer Vorsteuergrößen-Ermittlung 41 zur Verfügung gestellt, welche die Reagenzmittel-Vorsteuergröße S_Rea_VS aus dem Drehmoment Md und dem Drehsignal n ermittelt.

Das Reagenzmittelsignal S_Rea wird einem Katalysatormodell 42 zur Verfügung gestellt, das weiterhin die NOx-Rohkonzentration NOx_vK, die NOx-Konzentration NOx_nK, das Maß für die Temperatur te_Kat des SCR-Katalysators 16 und den Reagenzmittelschlupf ms_Rea_nK zugeführt erhält. Das Katalysatormodell 42 stellt den Reagenzmittel-Füllstand ReaSp bereit.

Das erfindungsgemäße Verfahren arbeitet folgendermaßen:

Die in der Steuerung 20 angeordnete Drehmoment-Ermittlung 30 ermittelt das von der Brennkraftmaschine 10 aufzubringende Drehmoment Md in Abhängigkeit wenigstens vom vorgegebenen Drehmoment-Sollwert MFa, der beispielsweise von einem nicht näher gezeigten Fahrpedal eines Kraftfahrzeugs bereitgestellt wird, in welchem die Brennkraftmaschine 10 als Antriebsmotor angeordnet ist. Das Drehmoment Md ist wenigstens näherungsweise ein Maß für die Last der Brennkraftmaschine 10. Bei der Ermittlung des Drehmoments Md können weiterhin das Drehsignal n und/oder das von der Lufterfassung 12 bereitgestellte Luftsignal ms_L berücksichtigt werden.

Die Steuerung 20 gibt das insbesondere anhand des Drehmoments Md festgelegte Kraftstoffsignal m_K an die Kraflstoff_Zumessvorrichtung 25 ab. Das Kraftstoffsignal m_K legt beispielsweise einen Kraftstoff-Einspritzzeitpunkt sowie eine KraftstoffEinspritzmenge fest.

Der in der Brennkraftmaschine 10 verbrannte Kraftstoff führt zum Abgasstrom ms_abg, der in Abhängigkeit vom Betriebspunkt der Brennkraftmaschine 10 die unerwünschte mehr oder wenig hohe NOx-Rohkonzentration NOx_vK enthalten kann.

Zur möglichst weitgehenden Beseitigung der NOx-Rohkonzentration NOx_vK ist wenigstens der SCR-Katalysator 16 im Abgasbereich 13 der Brennkraftmaschine 10 angeordnet. Neben dem SCR-Katalysator 16 können weitere Katalysatoren und/oder ein Partikelfilter vorgesehen sein. Der SCR-Katalysator 16 unterstützt die Reduktionsreaktion des NOx mit einem Reagenzmittel, das entweder in den Abgasbereich 13 mit der Reagenzmittel-Dosierung 14 eindosiert und/oder gegebenenfalls innermotorisch bereitgestellt wird. Anstelle des Reagenzmittels kann ein Ausgangsstoff vorgesehen sein. Im Fall des Reagenzmittels Ammoniak kann anstelle des Ammoniaks als Ausgangsstoff beispielsweise eine Harnstoff-Wasser-Lösung oder beispielsweise Ammoniumcarbamat vorgesehen sein. Die Dosierung wird mit dem Reagenzmittelsignal S_Rea festgelegt, das der Reagenzmittel-Dosierung 14 zur Verfügung gestellt wird. Alternativ oder zusätzlich kann bei einer innermotorischen Bereitstellung des Reagenzmittels das Kraftstoffsignal m_K mit dem Reagenzmittelsignal S_Rea derart modifiziert werden, dass das benötigte Reagenzmittel innermotorisch entsteht.

Nach dem Start des erfindungsgemäßen Verfahrens erfolgt die Festlegung des Reagenzmittel-Sollfüllstands ReaSp_Soll auf den vorgegebenen Reagenzmittel-Sollfüllstand ReaSp_Soll, der beispielsweise auf einen Wert festgelegt sein kann, der unterhalb des maximal möglichen Reagenzmittel-Füllstands im SCR-Katalysators 16 liegt, wenn ein Reagenzmittelschlupf ms_Rea_nK möglichst in allen Betriebszuständen vermieden werden soll. Eine vorteilhafte Ausgestaltung sieht dagegen vor, dass der vorgegebene Reagenzmittel-Sollfüllstand ReaSP_Soll mindestens dem maximal möglichen Reagenzmittel-Füllstand im SCR-Katalysator 16 entsprechend soll, der von der Temperatur te_Kat im SCR-Katalysator 16 abhängt. Der Zusammenhang ist in der eingangs genannten DE 10 2004 031 624 A1 ausführlich beschrieben, auf die hiermit vollinhaltlich Bezug genommen wird

Die Festlegung des Reagenzmittel-Sollfüllstands ReaSp_Soll kann auch auf einen höheren als den Maximalwert festgelegt werden, sodass in diesem Fall stets mit einem zumindest geringen Reagenzmittelschlupf ms_Rea_nK gerechnet werden muss. Der wesentliche Vorteil bei der Festlegung des Reagenzmittel-Sollfüllstand ReaSp_Soll auf mindestens den Maximalwert oder auf einen höheren Wert, der nur als Rechengröße existieren kann, liegt darin, dass der SCR-Katalysator 16 stets im Bereich seines maximalen Wirkungsgrads betrieben wird, bei dem die höchstmögliche NOx-Konvertierung auftritt. In sämtlichen Betriebszuständen sowohl der Brennkraftmaschine 10 als auch des SCR-Katalysators 16 und bei sämtlichen Kenngrößen des Abgases im Abgasbereich 13 wird sichergestellt, dass die NOx-Konzentration NOx_nK den minimal möglichen Wert aufweist. In Kauf genommen werden muss ein zumindest gelegentlich auftretender Reagenzmittelschlupf ms_Rea_nK. Sofern der Reagenzmittel-Sollfüllstand ReaSp_Soll auf einen höheren Wert als den Maximalwert festgelegt wird, tritt stets ein geringer Reagenzmittelschlupf ms_Rea_nK auf.

Der Reagenzmittel-Füllstand ReaSp im SCR-Katalysator 16 kann auf den vorgegebenen Reagenzmittel-Sollfüllstand ReaSp_Soll gesteuert werden. Vorzugsweise ist eine Regelung auf den vorgegebenen Reagenzmittel-Sollfiillstand ReaSp_Soll vorgesehen. In der zweiten Differenz-Ermittlung 36 wird der Reagenzmittel-Sollfiillstand ReaSp_Soll mit dem Reagenzmittel-Istfüllstand ReaSp_Ist verglichen. Die zweite Differenz-Ermittlung 36 bildet eine Differenz, die als Regelabweichung 37 dem Regler 38 zugeleitet wird, der aus der Regelabweichung 37 die Stellgröße 39 ermittelt. Die Stellgröße 39 wird im zweiten Summierer 40 zu der vorzugsweise vorhandenen Reagenzmittel-Vorsteuergröße S_Rea_VS addiert.

Die Reagenzmittel-Vorsteuergröße S_Rea_VS kann beispielsweise eine Grundmenge des zu dosierenden Reagenzmittels in Abhängigkeit von Betriebskenngrößen der Brennkraftmaschine 10 vorgeben. In der Vorsteuergrößen-Ermittlung 41 werden beispielsweise das Drehmoment Md sowie das Drehsignal n berücksichtigt. Diese Vorgehensweise ermöglicht eine vergleichsweise einfache Applikation.

Die Stellgröße 39, die gegebenenfalls mit der vorhandenen Reagenzmittel-Vorsteuergröße S_Rea_VS verknüpft wird, legt das Reagenzmittelsignal S_Rea fest, das der Reagenzmittel-Dosierung 15 und/oder der Kraftstoff-Zumessvorrichtung 25 zugeleitet wird. Das Reagenzmittelsignal S_Rea gibt beispielsweise einen Öffnungsquerschnitt eines Ventils frei, der einem vorgegebenen Reagenzmittel-Durchfluss entspricht, der weiterhin vom Reagenzmitteldruck abhängt.

Das Katalysator-Modell 42 ermittelt den Reagenzmittel-Füllstand ReaSp anhand des Reagenzmittelsignals S_Rea unter Berücksichtigung der NOx-Rohkonzentration NOx_vK, der NOx-Konzentration NOx_nK sowie des Maßes für die Temperatur te_Kat des SCR-Katalysators 16. Gegebenenfalls wird der Reagenzmittelschlupf ms_Rea_nK zusätzlich berücksichtigt. Das Katalysator-Modell 42 ist im bereits genannten Stand der Technik beschrieben, auf den an dieser Stelle nochmals Bezug genommen wird.

Vorgesehen ist die Ermittlung des berechneten Maßes NOx nK mod für die NOx-Konzentration NOx_nK. Die Berechnung erfolgt in der NOx-Konzentrations-Ermittlung 32 anhand des berechneten Maßes NOx_vK_mod für die NOx-Rohkonzentration NOx_vK, welche die NOx-Rohkonzentrations-Ermittlung 31 anhand beispielsweise des Drehmoments Md und/oder des Drehsignal n bereitstellt. Die NOx-Konzentrations-Ermittlung 32 ermittelt einen Wirkungsgrad des SCR-Katalysators 16 anhand des Maßes für die Temperatur te_Kat, das der Temperatursensor 17 bereitstellt, der stromaufwärts vor, im oder stromabwärts nach dem SCR-Katalysator 16 angeordnet sein kann, sodass das vom Temperatursensor 17 bereitgestellte Sensorsignal wenigstens näherungsweise ein Maß für die Temperatur te_Kat des SCR-Katalysators 16 ist. Anstelle einer Temperaturmessung kann auch eine Abschätzung der Temperatur te_Kat des SCR-Katalysators 16 vorgesehen sein.

Weiterhin wird in der NOx-Konzentrations-Ermittlung 32 vorzugsweise die Abgas-Raumgeschwindigkeit RG berücksichtigt, die aus den bekannten geometrischen Daten des SCR-Katalysators 16 und dem Abgasstrom ms_abg ermittelt werden kann. Zusätzlich wird der Reagenzmittel-Füllstand ReaSp im SCR-Katalysator 16 berücksichtigt, da der Wirkungsgrad insbesondere auch vom Reagenzmittel-Füllstand ReaSp abhängt.

Das von der NOx-Konzentrations-Ermittlung 32 berechnete Maß NOx_nK_mod für die NOx-Konzentration NOx_nK wird in der ersten Differenz-Ermittlung 33 vom Abgas-Sensorsignal S_nK abgezogen, um die Differenz D zu erhalten. Eine auftretende Differenz D kann in der Dosierstrategie berücksichtigt und das Reagenzmittelsignal S_Rea entsprechend beeinflusst werden.

Bei der Bereitstellung des Korrektursignals d_ReaSp wird neben der Differenz D weiterhin das Maß für die Temperatur te_Kat des SCR-Katalysators 16 berücksichtigt. Die erforderlichen Korrektursignale d_ReaSp werden im Kennfeld 34 zumindest in Abhängigkeit von der Differenz D und in Abhängigkeit vom Maß für die Temperatur te_Kat des SCR-Katalysators 16 hinterlegt. Das Kennfeld 34 wird in Abhängigkeit wenigstens von den beiden Größen adressiert und gibt das Korrektursignal d_ReaSp entsprechend dem hinterlegten Wert aus. Das Kennfeld 34 wird im Rahmen einer Applikation mit zumindest Wertepaaren versehen, wobei bei konstanter Differenz D bei höheren Temperaturen te_Kat die Dosierung des Reagenzmittels in geringerem Maß zu senken ist als bei niedrigeren Temperaturen te_Kat. Entsprechend ist bei konstanter Differenz D bei höheren Temperaturen te_Kat der Reagenzmittel - Füllstand ReaSp in geringerem Maße zu erhöhen als bei niedrigeren Temperaturen te_Kat.

Das Korrektursignal d_ReaSp könnte unmittelbar zur Beeinflussung des Reagenzmittelsignals S_Rea herangezogen werden. Im gezeigten Ausführungsbeispiel wird das Reagenzmittelsignal S_Rea indirekt über einen Eingriff in den Reagenzmittel-Füllstand ReaSp beeinflusst, wobei das Korrektursignal d_ReaSp den Reagenzmittel-Istfüllstand ReaSp_Ist im SCR-Katalysator 16 manipuliert. Der vom Katalysator-Modell 42 berechnete Reagenzmittel-Füllstand ReaSp wird mit dem Korrektursignal d_ReaSp beaufschlagt, sodass der Reagenzmittel-Istfüllstand ReaSp modifiziert wird Sofern eine Differenz D, entsprechend einem Reagenzmittelschlupf ms_Rea_nK, auftritt, erfolgt beispielsweise eine Erhöhung des Reagenzmittel-Istfüllstands ReaSp_Ist, die aufgrund des geschlossenen Regelkreises eine Verminderung des Reagenzmittelsignals S_Rea zur Folge hat.

Prinzipiell ist es möglich, die NOx-Konzentration NOx_nK nach dem SCR-Katalysator 16 mit einem NOx-Sensor und den Reagenzmittelschlupf ms_Rea_nK mit einem Reagenzmittel-Sensor zu erfassen. Besonders vorteilhaft ist jedoch die Ausnutzung einer vorhandenen Querempfindlichkeit des zweiten NOx-Sensors 18 gegenüber dem Reagenzmittel oder eine gezielte Herausbildung einer solchen Querempfindlichkeit. In diesem Fall spiegelt das Abgas-Sensorsignal S_nK die Summe aus Reagenzmittelschlupf ms_Rea_nK und NOx-Konzentration NOx_nK wider. Eine auftretende Differenz D könnte daher bedeuten, dass entweder ein Reagenzmittelschlupf ms_Rea_nK oder eine hohe NOx-Konzentration NOx_nK ausgetreten ist. Eine Unterscheidung wäre in diesem Betriebszustand nicht möglich. Wenn der Reagenzmittel-Sollfüllstand ReaSP_Soll im SCR-Katalysator 16 gemäß der vorteilhaften Ausgestaltung auf den maximal möglichen Wert festgelegt wird, kann davon ausgegangen werden, dass eine Überdosierung des Reagenzmittels vorliegt, der einem Reagenzmittelschlupf ms_Rea_nK entspricht. Im gezeigten Ausführungsbeispiel ist die Regelung vorgesehen, sodass der Reagenzmittelschlupf ms_Rea_nK entweder nur kurzzeitig auftritt oder bei einer ständigen Überdosierung des Reagenzmittels auf ein geringes Maß begrenzt wird.

## Patentansprüche

1. Verfahren zum Betreiben einer Brennkraftmaschine (10), in deren Abgasbereich (13) wenigstens ein SCR-Katalysator (16) angeordnet ist, der mit einem Reagenzmittel beaufschlagt wird, welches zur NOx-Konvertierung im SCR-Katalysator (16) beiträgt, bei dem wenigstens ein Maß (NOx_nK_mod) für die stromabwärts nach dem SCR-Katalysator (16) auftretende NOx-Konzentration (NOx_nK) sowohl berechnet als auch mit einem NOx-Sensor (18) gemessen wird und bei dem die Differenz (D) zwischen dem berechneten Maß (NOx_nK_mod) und dem gemessenen Maß für die NOx-Konzentration (NOx_nK) stromabwärts nach dem SCR-Katalysator (16) ermittelt wird, **dadurch gekennzeichnet, dass** ein Reagenzmittelsignal (S_Rea), welches die Dosierung des Reagenzmittels festlegt, in Abhängigkeit von der Differenz (D) und in Abhängigkeit von einem Maß für die Temperatur (te_Kat) des SCR-Katalysators (16) mit einem Korrektursignal (d_ReaSP) beeinflusst wird.

2. Verfahren nach Anspruch 1, **dadurch gekennzeichnet, dass** die Korrektursignale (d_ReaSP) in Abhängigkeit von der Differenz (D) und vom Maß für die Temperatur (te_Kat) des SCR-Katalysators (16) in einem Kennfeld (34) hinterlegt werden.

3. Verfahren nach Anspruch 1, **dadurch gekennzeichnet, dass** das Reagenzmittelsignal (S_Rea) in Abhängigkeit vom Reagenzmittel-Füllstand (ReaSP) im SCR-Katalysator (16) festgelegt wird.

4. Verfahren nach Anspruch 3, dadurch gekenntzeichnet, dass das Reagenzmittelsignal (S_Rea) indirekt über eine Manipulation des Reagenzmittel-Füllstands (ReaSP) im SCR-Katalysator (16) beeinflusst wird.

5. Verfahren nach Anspruch 3 oder 4, **dadurch gekennzeichnet, dass** der Reagenzmittel-Füllstand (ReaSP_Ist) im SCR-Katalysator (16) auf einen vorgegebenen Reagenzmittel-Sollfüllstand (ReaSP_Soll) geregelt wird.

6. Verfahren nach Anspruch 1, **dadurch gekennzeichnet, dass** der Berechnung der stromabwärts nach dem SCR-Katalysator (16) auftretenden NOx-Konzentration (NOx_nK) neben der NOx-Rohemission (NOx_vK) der Brennkraftmaschine (10) ein Maß für die Temperatur (te_Kat) des SCR-Katalysators (16) und der Reagenzmittel-Füllstand (ReaSP) im SCR-Katalysator (16) und/oder die Raumgeschwindigkeit (RG) des Abgases im SCR-Katalysator (16) zugrunde gelegt werden.

7. Verfahren nach Anspruch 4, **dadurch gekennzeichnet, dass** der vorgegebene Reagenzmittel-Sollfüllstand (ReaSP_Soll) mindestens auf einen Maximalwert festgelegt wird, der einem vollständig mit Reagenzmittel gefüllten SCR-Katalysator (16) entspricht.

8. Verfahren nach Anspruch 1, **dadurch gekennzeichnet, dass** der NOx-Sensor (18) eine Querempfmdlichkeit gegenüber dem Reagenzmittel aufweist, die gezielt ausgenutzt wird.

9. Verfahren nach Anspruch 8, **dadurch gekennzeichnet, dass** bei einer aufgetretenen Differenz (D) zunächst eine Beeinflussung des Reagenzmittelsignals (S_Rea) im Sinne einer Verminderung der Dosierung des Reagenzmittels vorgenommen wird.

10. Vorrichtung zum Betreiben einer Brennkraftmaschine (10), in deren Abgasbereich (13) zumindest ein SCR-Katalysator (16) angeordnet ist, der mit einem Reagenzmittel beaufschlagt wird, welches zur NOx-Konvertierung im SCR-Katalysator (16) beiträgt, dadurch gekennzeichet, dass zumindest ein zur Durchführung des Verfahrens hergerichtetes Steuergerät (20) vorgesehen ist.

11. Vorrichtung nach Anspruch 10, dadurch gekennzeichet, dass das Steuergerät (20) eine Differenz-Ermittlung (33) enthält, welche die Differenz (D) zwischen dem von einem gegenüber dem Reagenzmittel querempfindlichen NOx-Sensor (18) bereitgestellten Abgas-Sensorsignal (S_nK) und einer von einer NOx-Konzentrations-Ermittlung (32) berechneten NOx-Konzentration (NOx_nK_mod) stromabwärts nach dem SCR-Katalysator (16) ermittelt.

12. Vorrichtung nach Anspruch 11, **dadurch gekennzeichnet, dass** das Steuergerät (20) ein Kennfeld (34) enthält, welches ein Korrektursignal (d_ReaSP) zur Beeinflussung des Reagenzmittelsignals (S_Rea) bereitstellt, in welchem die Korrektursignale (d_ReaSP) zumindest in Abhängigkeit von der Differenz (D) und in Abhängigkeit vom Maß für die Temperatur (te_Kat) des SCR-Katalysators (16) hinterlegt sind.

## Claims

1. Method for operating an internal combustion engine (10), in the exhaust-gas region (13) of which is arranged at least one SCR catalytic converter (16) which is acted on with a reagent which contributes to the NOx conversion in the SCR catalytic converter (16), in which method at least one measure (NOx_nK_mod) for the NOx concentration (NOx_nK) occurring downstream of the SCR catalytic converter (16) is both calculated and also measured by means of a NOx sensor (18), and in which method the difference (D) between the calculated measure (NOx_nK_mod) and the measured measure for the NOx concentration (NOx_nK) downstream of the SCR catalytic converter (16) is determined, **characterized in that** a reagent signal (S_Rea) which sets the dosing of the reagent is influenced with a corrective signal (d_ReaSP) as a function of the difference (D) and as a function of a measure for the temperature (te_Kat) of the SCR catalytic converter (16).

2. Method according to Claim 1, **characterized in that** the corrective signals (d_ReaSP) are stored in a characteristic map (34) as a function of the difference (D) and of the measure for the temperature (te_Kat) of the SCR catalytic converter (16).

3. Method according to Claim 1, **characterized in that** the reagent signal (S_Rea) is set as a function of the reagent filling level (ReaSP) in the SCR catalytic converter (16).

4. Method according to Claim 3, **characterized in that** the reagent signal (S_Rea) is influenced indirectly by means of a manipulation of the reagent filling level (ReaSP) in the SCR catalytic converter (16).

5. Method according to Claim 3 or 4, **characterized in that** the reagent filling level (ReaSP_Ist) in the SCR catalytic converter (16) is regulated to a predefined reagent setpoint filling level (ReaSP_Soll).

6. Method according to Claim 1, **characterized in that** the calculation of the NOx concentration (NOx_nK) occurring downstream of the SCR catalytic converter (16) is based not only on the NOx untreated emissions (NOx_vK) of the internal combustion engine (10) but also on a measure for the temperature (te_Kat) of the SCR catalytic converter (16) and the reagent filling level (ReaSP) in the SCR catalytic converter (16) and/or the spatial velocity (RG) of the exhaust gas in the SCR catalytic converter (16).

7. Method according to Claim 4, **characterized in that** the predefined reagent setpoint filling level (ReaSP_Soll) is set at least to a maximum value which corresponds to an SCR catalytic converter (16) fully filled with reagent.

8. Method according to Claim 1, **characterized in that** the NOx sensor (18) has a cross-sensitivity with respect to the reagent, which is utilized in a targeted manner.

9. Method according to Claim 8, **characterized in that**, if a difference (D) has arisen, firstly the reagent signal (S_Rea) is influenced in the sense of a reduction in the dosing of the reagent.

10. Device for operating an internal combustion engine (10), in the exhaust-gas region (13) of which is arranged at least one SCR catalytic converter (16) which is acted on with a reagent which contributes to the NOx conversion in the SCR catalytic converter (16), **characterized in that** at least one control unit (20) is provided which is set up to carry out the method.

11. Device according to Claim 10, **characterized in that** the control unit (20) comprises a difference determining means (33) which determines the difference (D) between the exhaust-gas sensor signal (S_nK), which is provided by a NOx sensor (18) which is cross-sensitive with respect to the reagent, and a NOx concentration (NOx_nK_mod) downstream of the SCR catalytic converter (16), which is calculated by a NOx concentration determining means (32).

12. Device according to Claim 11, **characterized in that** the control unit (20) comprises a characteristic map (34) which provides a corrective signal (d_ReaSP) for influencing the reagent signal (S_Rea), in which characteristic map (34) the corrective signals (d_ReaSP) are stored at least as a function of the difference (D) and as a function of the measure for the temperature (te_Kat) of the SCR catalytic converter (16).

## Revendications

1. Procédé pour faire fonctionner un moteur à combustion interne (10), dans la région des gaz d'échappement (13) duquel est disposé au moins un catalyseur à réduction catalytique sélective SCR (16), qui est sollicité avec un réactif qui contribue à la transformation des NOx dans le catalyseur à SCR (16), dans lequel au moins une mesure (Nox_nK_mod) de la concentration en NOx (NOx_nK) existant en aval après le catalyseur à SCR (16) est calculée et mesurée avec un capteur de NOx (18), et dans lequel la différence (D) entre la mesure calculée (NOx_nK_mod) et la mesure mesurée de la concentration en NOx (NOx_nK) est déterminée en aval après le catalyseur à SCR (16), **caractérisé en ce qu'**un signal de réactif (S_Rea), qui fixe le dosage de réactif, est influencé en fonction de la différence (D) et d'une mesure de la température (te_Kat) du catalyseur à SCR (16) avec un signal de correction (d_ReaSP).

2. Procédé selon la revendication 1, **caractérisé en ce que** les signaux de correction (d_ReaSP) sont saisis dans un champ caractéristique (34) en fonction de la différence (D) et de la mesure de la température (te_Kat) du catalyseur à SCR (16).

3. Procédé selon la revendication 1, **caractérisé en ce que** le signal de réactif (S_Rea) est fixé en fonction du niveau de remplissage de réactif (ReaSP) dans le catalyseur à SCR (16).

4. Procédé selon la revendication 3, **caractérisé en ce que** le signal de réactif (S_Rea) est influencé indirectement par le biais d'une manipulation du niveau de remplissage de réactif (ReaSP) dans le catalyseur à SCR (16).

5. Procédé selon la revendication 3 ou 4, **caractérisé en ce que** le niveau de remplissage de réactif (ReaSP_Ist) dans le catalyseur à SCR (16) est réglé à un niveau de remplissage de consigne de réactif (ReaSP_Soll) prédéfini.

6. Procédé selon la revendication 1, **caractérisé en ce que** pour le calcul de la concentration en NOx (NOx_nK) existant en aval après le catalyseur à SCR (16) on utilise comme base en plus de l'émission brute de NOx (NOx_vK) du moteur à combustion interne (10) une mesure de la température (te_Kat) du catalyseur à SCR (16) et le niveau de remplissage de réactif (ReaSP) dans le catalyseur à SCR (16) et/ou la vitesse spatiale (RG) du gaz d'échappement dans le catalyseur à SCR (16).

7. Procédé selon la revendication 4, **caractérisé en ce que** le niveau de remplissage de consigne de réactif (ReaSP_Soll) prédéfini est fixé à au moins une valeur maximale qui correspond à un catalyseur à SCR (16) complètement rempli de réactif.

8. Procédé selon la revendication 1, **caractérisé en ce que** le capteur de NOx (18) présente une sensibilité transversale par rapport au réactif qui est utilisée de manière spécifique.

9. Procédé selon la revendication 8, **caractérisé en ce que** dans le cas de l'apparition d'une différence (D), on effectue une influence du signal de réactif (S_Rea) dans le sens d'une réduction du dosage de réactif est exercée.

10. Dispositif pour faire fonctionner un moteur à combustion interne (10), dans la région des gaz d'échappement (13) duquel est disposé au moins un catalyseur à réduction catalytique sélective SCR (16), qui est sollicité avec un réactif qui contribue à la transformation des NOx dans le catalyseur à SCR (16), **caractérisé en ce qu'**il est prévu au moins un appareil de commande (20) prévu pour mettre en oeuvre le procédé.

11. Dispositif selon la revendication 10, **caractérisé en ce que** l'appareil de commande (20) comprend une détermination de différence (33) qui détermine la différence (D) entre le signal de capteur de gaz d'échappement (S_nK) fourni par un capteur de NOx (18) à sensibilité transversale vis-à-vis du réactif, et une concentration en NOx (NOx_nK_mod) calculée par une détermination de concentration en NOx (32) en aval après le catalyseur à SCR (16).

12. Dispositif selon la revendication 11, **caractérisé en ce que** l'appareil de commande (20) comprend un champ caractéristique (34) qui fournit un signal de correction (d_ReaSP) pour influencer le signal de réactif (S_Rea), dans lequel les signaux de correction (d_ReaSP) sont saisis au moins en fonction de la différence (D) et en fonction de la mesure de la température (te_Kat) du catalyseur à SCR (16).
